# EUROPÄISCHE PATENTSCHRIFT

(11) **EP 0 376 879 B1**
(45) Veröffentlichungstag und Bekanntmachung des Hinweises auf die Patenterteilung: **18.05.1994**
(21) Anmeldenummer: 89730220.4
(22) Anmeldetag: 20.12.1989
(51) Int. Cl.: G03B 17/10, G02B 23/16

(54) **Schallgedämpftes Wechselobjektiv**
Sound-absorbing interchangeable lens
Objectif interchangeable insonorisé

(30) Priorität: 24.12.1988 DE 3843838
(43) Veröffentlichungstag der Anmeldung: 04.07.1990
(73) Patentinhaber: ARNOLD & RICHTER CINE TECHNIK GMBH & CO. BETRIEBS KG., D-80799 München (DE)
(72) Erfinder: Blaschek, Otto, D-8011 Aschheim (DE)
(74) Vertreter: Ninnemann, Detlef, Dipl.-Ing.

(56) Entgegenhaltungen:
- EP-A- 0 144 933
- EP-A- 0 289 693

## Beschreibung

Die Erfindung betrifft ein Wechselobjektiv gemäß dem Oberbegriff des Anspruchs 1 sowie ein Verfahren zur Herstellung eines derartigen Wechselobjektivs.

Bei Tonbildaufnahmen stellen die im Betrieb einer Laufbildkamera unvermeidlichen, vom Kamerawerk verursachten Laufgeräusche eine störende Geräuschkulisse dar. Um eine wirksame Geräuschminderung zu erreichen, ist es bekannt, die bei den Aufnahmen verwendeten Objektive mit einer zusätzlich aufsetzbaren Schallschutzhaube zu versehen. Diese Art der Schallisolierung bringt jedoch entscheidende Nachteile bei der Handhabung der Filmkamera sowie beim Austausch eines Wechselobjektivs mit sich.

Zur Erzielung einer verbesserten Schallisolierung ohne eine Beeinträchtigung bei der Handhabung des Wechselobjektivs ist aus der EP-A-0 289 693 ein Wechselobjektiv bekannt, bei dem die Außenhülle des Wechselobjektivs gegenüber der Objektivkapsel schallisoliert ist. Dies wird im wesentlichen dadurch erreicht, daß eine den Großteil der Außenhülle bildende Hülse über einen Dämpfungsring mit dem Flansch des Wechselobjektivs, der mittels eines Bajonettrings mit dem Kameragehäuse koppelbar ist, fest verbunden ist. Hierdurch wird die Fortpflanzung von Schallwellen aus dem Kameragehäuse in die Außenhülle weitestgehend abgeschwächt.

Um eine entsprechende Schallisolierung auch objektseitig zu erzielen, ist im objektseitigen Endbereich der Außenhülle vor der Objektivkapsel zusätzlich eine Planglasscheibe als Frontelement angeordnet, die, eingefaßt von einem Dämpfungsring, in einem Reflexschutz gehalten ist, der mit der Objektivkapsel verbunden ist und in seinem an die Außenfassung angrenzenden Umfangsbereich einen weiteren Dämpfungsring zur Schallisolierung aufweist.

Der vorliegenden Erfindung liegt nun die Aufgabe zugrunde, ein Wechselobjektiv der eingangs genannten Art so weiterzubilden daß eine verbesserte Schallisolierung bei einfachem Aufbau und geringen Herstellungskosten gegeben ist.

Diese Aufgabe wird durch die kennzeichnenden Merkmale des Anspruchs 1 gelöst.

Eine derartige Ausbildung des Wechselobjektivs ermöglicht eine vollständige und einfache Isolierung des Außenmantels gegenüber der Objektivkapsel. Die radial abstützende Anordnung der Dämpfungsringe nach Art einer Zweipunktlagerung macht eine feste Verbindung der Außenhülle mit dem Objektivflansch überflüssig. Dies hat zum einen den Vorteil, daß nicht nachträglich noch durch eine radiale Abdeckung, wie sie bei einer Anordnung des Dämpfungsrings gemäß der obengenannten Patentanmeldung notwendig ist, Schallbrücken zwischen dem Objektivflansch und der Hülse geschaffen werden; zum andern ermöglicht die erfindungsgemäße Art der Anordnung der Dämpfungsringe auf der Objektivkapsel eine besonders einfache Art der Montage durch axiales Aufschieben des Außenmantels auf die Objektivkapsel von der Kameraseite her.

Der objektseitige Dämpfungsring legt den Außenmantel auf der Objektivkapsel axial fest. Dies macht eine besondere Fixierung des Außenmantels auf der Objektivkapsel überflüssig.

Zur Vermeidung von Schallbrücken zwischen der Objektivkapsel und dem Außenmantel des Wechselobjektivs sind Mitnehmerstifte zur Verbindung der im Außenmantel enthaltenen Verstellelemente, nämlich eines Brennweitenrings, eines Entfernungsrings und eines Blendenrings, die aus der Objetivkapsel hervorragen, mit den entsprechenden, im Innern der Objektivkapsel angeordneten Verstelleinrichtungen über Dämpfungselemente verbunden.

Eine Variante der erfindungsgemäßen Lösung betrifft die Gestaltung des Frontbereichs der Objektivkapsel. Das Frontlinsensystem ist zentriert in einem schallabsorbierenden Dämpfungsring in der Objektivkapsel gelagert. Die Verwendung eines ohnehin zur Erzielung bestimmter optischer Eigenschaften des Wechselobjektivs notwendigen Frontlinsensystems erübrigt den Einsatz zusätzlicher Bauteile zur Erzielung einer gewünschten objektseitigen Isolierung der Objektivkapsel.

Dieses Frontlinsensystem ermöglicht neben einer Absorption der vom Kamerawerk erzeugten, frontseitig aus dem Objektiv austretenden Schallwellen auch eine Körperschallisolierung, da aufrund der besonderen Anordnung des Frontlinsensystems in einem schallabsorbierenden Dämpfungsring mit Zentrierfunktion keine weiteren Körperschall übertragende Abstützungen des Frontlinsensystems im Frontbereich des Wechseljobjektivs notwendig sind.

Die radiale Lagerung in dem Dämpfungsring ist mit einer Genauigkeit ausgeführt, die eine exakte Ausrichtung des Frontlinsensystems auf der Objektiylängsachse sicherstellt.

Nach einer besonders vorteilhaften Ausgestaltung der Erfindung bildet der Tubus mit der Linsenfassung des Frontlinsensystems eine Fertigungseinheit. Hierdurch wird es ermöglicht, den beim montierten Wechselobjektiv Zentrierfunktion übernehmenden Dämpfungsring in einen genau definierten Zwischenraum zwischen dem Tubus und der Linsenfassung des Frontlinsensystems einzuvulkanisieren ohne Einfluß auf die Zentrierung der Linsenfassung gegenüber dem Tubus.

Nach dem erfindungsgemäßen Verfahren zur Herstellung eines Wechselobjektivs der eingangs genannten Art wird ein zur Aufnahme des als Frontlinsensystems ausgeführten Frontelements dienender und mit der Objektivkapsel verbundener Tubus einstückig mit einer Linsenfassung des Frontlinsensystems als Fertigungseinheit gefertigt, und nach dem Einvulkanisieren eines Dämpfungsrings in einen hierfür vorgesehenen Zwischenraum der Fertigungseinheit erfolgt die Trennung der Fertigungseinheit in zwei unabhängig voneinander handhabbare Teile, nämlich den Tubus und die Linsenfassung, wobei der Dämpfungsring nach dem Trennvorgang mit dem Einschraubtubus und der Linsenfassung verbunden bleibt.

Infolge der erst nach dem Einvulkanisieren des Dämpfungsrings erfolgenden Trennung der Fertigungseinheit in den Tubus und die Linsenfassung bleibt die Zentrierung der Bohrung der Linsenfassung gegenüber der Mantelfläche des Tubus trotz des dazwischenliegenden Dämpfungsrings erhalten. Nach der Trennung wird beim montierten Wechselobjektiv die Zentrierfunktion vom Dämpfungsring übernommen.

Aufgrund des Einvulkanisierens des Dämpfungsrings in die einstückige, ringförmige Fertigungseinheit ist sichergestellt, daß der Dämpfungsring auch nach erfolgter Trennung keine Auswirkung auf Lagetoleranzen zwischen der Bohrung der Linsenfassung und der Mantelfläche des Einschraubtubus haben kann. Die ursprüngliche Zentrierung bleibt also erhalten.

Der objektseitige Dämpfungsring zur Lagerung des Außenmantel und der Dämpfungsring zur Aufnahme des Frontlinsensystems stützen sich an einander gegenüberliegenden Stützflächen des mit der Objektivkapsel verschraubten Tubus ab. Diese vorteilhafte Abstützung von Außenmantel, Tubus und Frontlinsensystem gegeneinander in einem Querschnitt verhindert eine örtliche Verformung der Objektivkapsel in Folge versetzt voneinander angreifender Lagerkräfte.

Gemäß einer vorteilhaften Weiterbildung der Erfindung ist zwischen einem objektseitigen Endbereich des Außenmantels und dem Frontlinsensystem ein mit dem Außenmantel verschraubter Reflexschutz angeordnet, derart, daß zwischen dem Frontlinsensystem und dem Reflexschutz ein ringförmiger Luftspalt verbleibt. Hierdurch ist sichergestellt, daß die koaxiale Ausrichtung des Frontlinsensystems zur Objektiylängsachse durch die radiale Lagerung im Dämpfungsring nicht durch einen eventuellen Kontakt des Frontlinsensystems mit dem Reflexschutz beeinträchtigt wird.

Nach einem weiteren vorteilhaften Merkmal positioniert der Reflexschutz den auf die Innenfläche einer Hülse vulkanisierten objektseitigen Dämpfungsring, der zur Abstützung des Außenmantels gegenüber der Objektivkapsel dient, axial im Außenmantel.

Vorteilhafte Ausgestaltungen und Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:
Figur 1 einen Längsschnitt durch ein Wechselobjektiv ent lang der Objektivachse und
Figur 2 einen Längsschnitt durch ein Vordrehteil zur Ein fassung des Frontlinsensystems.

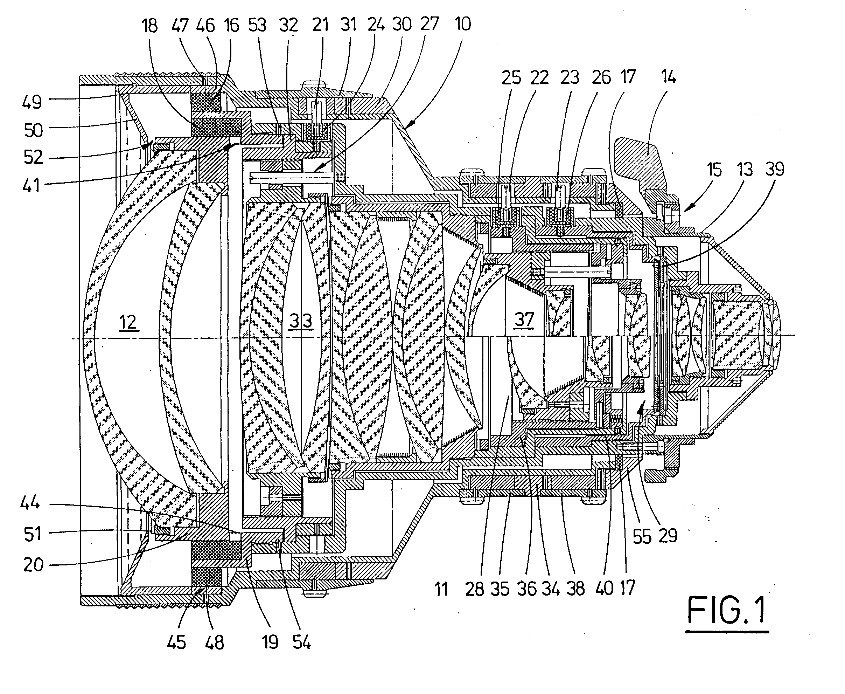

Das in Figur 1 dargestellte, mit einer Schallisolierung versehene Wechselobjektiv ist im wesentlichen zusammengesetzt aus einem Außenmantel 10, einer Objektivkapsel 11 und einem Frontlinsensystem 12. Zum Anschluß an eine Laufbildkamera ist das Wechselobjektiv mit einer unmittelbar an der Objektivkapsel 11 befestigten Objektivfassung 13 versehen, die in ein über einen Griff 14 verriegelbares Kamerabajonett 15 einsetzbar ist.

Der Außenmantel 10 ist über Dämpfungsringe 16, 17 auf der Objektivkapsel 11 radial abgestützt. Die Dämpfungsringe 16, 17 übernehmen hierbei gleichzeitig Zentrierfunktion. Der objektseitige Dämpfungsring 16 dient darüberhinaus zur axialen Festlegung des Außenmantels 10 gegenüber der Objektivkapsel 11.

Das von der Objektivkapsel 11 aufgenommene Frontlinsensystem 12 ist in einem weiteren Dämpfungsring 18 radial gelagert, der zwischen einem die Objektivkapsel 11 objektseitig fortsetzenden Einschraubtubus 19 und einer Linsenfassung 20 des Frontlinsensystems 12 angeordnet ist. Hierbei ist die Linsenfassung 20 derart durch den Dämpfungsring 18 aufgenommen, daß zwischen dem Einschraubtubus 19 und der Linsenfassung 20 kein Körperkontakt besteht.

Durch diese besondere Art der Anordnung des Frontlinsensystems 12 in der Objektivkapsel 11 ist sichergestellt, daß von dem Kamerawerk der Laufbildkamera 1 in die Objektivkapsel 11 übertragener Schall nicht durch das Frontlinsensystem 12 objektseitig aus dem Wechselobjektiv austreten kann. Die Isolierung des Außenmantels 10 gegenüber der Objektivkapsel 11 durch die Dämpfungsringe 16, 17 dient der radialen Abschirmung der Objektivkapsel 11 gegenüber der Umgebung des Wechselobjektivs.

Um zu verhindern, daß von der Objektivkapsel 11 in den Außenmantel 10 hineinreichende Mitnehmerstifte 21, 22, 23 zur Bedienung von in der Objektivkapsel 11 befindlichen Verstelleinrichtungen Schallbrücken zwischen der Objektivkapsel 11 und dem Außenmantel 10 bilden, sind die Mitnehmerstifte 21, 22, 23 im Bereich der Objektivkapsel 11 in Dämpfungselementen 24, 25, 26 gelagert.

Im einzelnen bestehen die Verstelleinrichtungen aus einer Brennweitenverstellung 27, einer Schärfentiefeneinstellung 28, und einer Blendenverstellung 29. Der Mitnehmerstift 21 dient zur mechanischen Kopplung eines gegenüber dem Außenmantel 10 und einem auf diesem befestigten Noniusring 30 drehbaren Brennweitenrings 31 mit der Brennweitenverstellung 27. Der Brennweitenring 31 erlaubt die Einstellung einer aus dem Brennweitenbereich des als Zoom-Objektiv ausgeführten Wechselobjektivs ausgewählten Brennweite.

Die Brennweitenverstellung 27 besteht dabei im wesentlichen aus einem durch einen Stellring 32 entlang der Objektivlängsachse des Wechselobjektivs verschiebbaren Zoomlinsen-System 33. Zur brennweitenabhängigen Fokussierung des Wechelobjektivs dient ein gegenüber dem Außenmantel 10 und einem Noniusring 34 drehbarer Entfernungsring 35, der über den Mitnehmerstift 22 auf das durch einen Stellring 36 entlang der Objektivlängsachse verschiebbare Fokuslinsen-System 37 einwirkt.

Der Mitnehmerstift 23 schließlich stellt die Verbindung zwischen einem gegenüber dem Außenmantel 10 drehbaren Blendenring 38 mit einer auf eine Blendeneinrichtung 39 einwirkenden Mitnehmerhülse 40 her.

Das Frontlinsensystem 12 ist mittels des Einschraubtubus 19 mit der Objektivkapsel 11 verbunden. Zur schallisolierenden Aufnahme des Frontlinsensystems 12 in den Einschraubtubus 19 dient der die Linsenfassung 20 des Frontlinsensystems 12 radial aufnehmende Dämpfungsring 18. Der Einschraubtubus 19 bildet zusammen mit dem Dämpfungsring 18 und der Linsenfassung 20 eine Einheit, da der Dämpfungsring 18 zwischen dem Einschraubtubus 19 und der Linsenfassung 20 ringfömig einvulkanisiert ist.

Um die schallisolierende Wirkung des Dämpfungsrings 18 nicht zu beeinträchtigen, ist zwischen der Linsenfassung 20 und dem Einschraubtubus 19 ein ringförmiger, axialer Spalt 41 vorgesehen, so daß kein direkter Kontakt zwischen der Linsenfassung 20 und dem Einschraubtubus 19 gegeben ist.

Da an die Zentrierung des Frontlinsensystems 12 im optischen System des Wechselobjektivs höchste Anforderungen gestellt werden, muß dies natürlich bei der Fertigung der aus Einschraubtubus 19, Dämpfungsring 18 und Linsenfassung 20 bestehenden Einheit berücksichtigt werden. Daher wird bei der Fertigung dieser Einheit nach einem besonderen Verfahren vorgegangen.

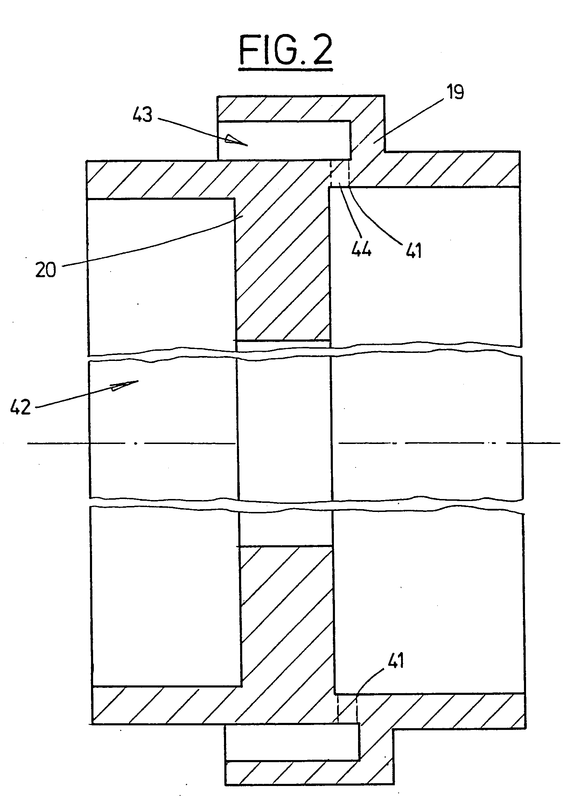

Zunächst wird eine aus dem Einschraubtubus 19 und der Linsenfassung 20 bestehende, einstückige Fertigungseinheit 42 als Vordrehteil gemäß Figur 2 gefertigt. Sodann erfolgt das ringförmige Einvulkanisieren des Dämpfungsrings 18 in einen ringförmigen Zwischenraum 43 der Fertigungseinheit 42. Nach Beendigung des Vulkanisiervorgangs erfolgt dann das Fertigdrehen der Fertigungseinheit 42.

Als letzter Arbeitsgang wird der zwischen der Linsenfassung 20 und dem Einschraubtubus 19 nach dem Fertigdrehen verbliebene Steg 44 durchstoßen, so daß der Spalt 41 entsteht und kein unmittelbarer Kontakt mehr zwischen der Linsenfassung 20 und dem Einschraubtubus 19 vorhanden ist. Der bei der Montage des Frontlinsensystems 12 nicht mehr vorhandene Steg 44 ist in Figur 1 gestrichelt dargestellt.

Der Umfang des Einschraubtubus 19 dient zur Aufnahme des Dämpfungsrings 16, der sowohl zur Zentrierung des Außenmantels 10 gegenüber der Objektivkapsel 11 als auch zur axialen Ausrichtung des Außenmantels 10 gegenüber der Objektivkapsel 11 vorgesehen ist. Zu diesem Zweck ist der Dämpfungsring 16 auf die Innenfläche einer Hülse 45 vulkanisiert, die an einem Bohrungsabsatz 46 des Außenmantels 10 axial anliegt. Mittels Gewindestifte 47, 48 ist die Hülse 45 in dieser Position gesichert.

Von der Objektseite her ist ein Reflexschutz 49 auf Anschlag gegen die Hülse 45 in den Außenmantel 10 eingeschraubt. Dieser Reflexschutz 49 erstreckt sich mit seiner Schirmwandung 50 vom Außenmantel 10 konisch zulaufend bis zum Frontlinsensystem 12, derart, daß zwischen der Schirmwandung 50 und einem Vorschraubring 51 des Frontlinsensystems 12 ein ringförmiger axialer Luftspalt 52 verbleibt. So ist sichergestellt, daß der Reflexschutz 49 die Zentrierung des Frontlinsensystems 12 durch den Dämpfungsring 18 nicht beeinträchtigen kann.

Das entsprechend dem Ausführungsbeispiel ausgeführte Wechselobjektiv ermöglicht eine besonders einfach Montage der drei voneinander durch die Dämpfungsringe 16, 17, 18 isolierten Baugruppen (Außenmantel 10, Objektivkapsel 11 und Frontlinsensystem 12).

Ausgehend von der Objektivkapsel 11 wird das Frontlinsensystem 12 als eine Montageeinheit mit dem Einschraubtubus 19 in die Objektivkapsel 11 eingeschraubt und mit Gewindestiften 53, 54 gesichert. Anschließend wird der Außenmantel 10 von der Kameraseite her so weit auf die Objektivkapsel 11 aufgeschoben, bis der Bohrungsabsatz 46 mit der Hülse 45 des bereits vorher auf den Umfang des Einschraubtubus 19 aufgedrückten Dämpfungsrings 16 zum Anschlag kommt.

Nach dem Einschrauben der Mitnehmerstifte 21, 22, 23 in die Dämpfungselemente 24, 25, 26 der Objektivkapsel 11 können dann die Anbauteile des Außenmantels 10, wie Brennweitenring 31, Noniusring 30, Entfernungsring 35 und Noniusring 34 montiert werden. Anschließend erfolgt die Verschraubung eines Stützrings 55 mit dem in ihm angeordneten Dämpfungsring 17 zur kameraseitigen Abstützung des Außenmantels 10. Die Montage des Blendenrings 38 vervollständigt den Außenmantel 10. Abschließend wird dann der Reflexschutz 49 objektseitig in den Außenmantel 10 eingeschraubt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen im Rahmen der Ansprüche Gebrauch machen.

## Patentansprüche

1. Wechselobjektiv für eine Laufbildkamera mit einer an der Laufbildkamera lösbar befestigten Objektivfassung (13), einer mit der Objektivfassung verbundenen Objektivkapsel (11) und einem die Verstellelemente des Wechselobjektivs enthaltenden Außenmantel (10), der mit der Objektivkapsel (11) über schallabsorbierende Dämpfungsringe (16, 17, 18) verbunden ist,
**dadurch gekennzeichnet,** daß
ein objektseitiger Dämpfungsring (16) und ein kameraseitiger Dämpfungsring (17) den Außenmantel (10) in seinen Endbereichen auf der Objektivkapsel (11) radial abstützend zentrieren.

2. Wechselobjektiv nach Anspruch 1, **dadurch gekennzeichnet,** daß der objektseitige Dämpfungsring (16) den Außenmantel (10) auf der Objektivkapsel (11) axial festlegt.

3. Wechselobjektiv nach Anspruch 1 oder 2, **dadurch gekennzeichnet,** daß die im Außenmantel (10) enthaltenen Verstellelemente über aus der Objektivkapsel (11) hervorragende Mitnehmerstifte (21, 22, 23) mit den entsprechenden Verstelleinrichtungen innerhalb der Objektivkapsel (11) in Verbindung stehen, wobei die Mitnehmerstifte (21, 22, 23) über Dämpfungselemente (24, 25, 26) mit den Verstelleinrichtungen verbunden sind.

4. Wechselobjektiv nach Anspruch 1
**gekennzeichnet durch**
ein mit der Objektivkapsel verbundenes, im Frontbereich der Objektivkapsel angeordnetes Frontlinsensystem (12), das über einen der schallabsorbierenden Dämpfungsringe (18) mit der Objektivkapsel (11) verbunden und an ihr zentriert gelagert ist.

5. Wechselobjektiv nach Anspruch 4, **dadurch gekennzeichnet,** daß der Dämpfungsring (18) in einen Zwischenraum (43) einer aus einem Tubus (19) und einer Linsenfassung (20) des Frontlinsensystems (12) bestehenden Fertigungseinheit (42) einvulkanisiert ist.

6. Wechselobjektiv nach Anspruch 4 oder 5, **dadurch gekennzeichnet,** daß der Tubus (19) einen die Objektivkapsel (11) objektseitig verlängernden Bestandteil der Objektivkapsel (11) bildet und mit dieser verschraubt ist.

7. Wechselobjektiv nach einem der Ansprüche 5 oder 6, **dadurch gekennzeichnet,** daß der objektseitige Dämpfungsring (16) zur Lagerung des Außenmantels (10) und der Dämpfungsring (18) zur Aufnahme des Fronlinsensystems (12) sich an einander gegenüberliegenden Stützflächen des Tubus (19) der Objektivkapsel (11) abstützen.

8. Wechselobjektiv nach einem der Ansprüche 4 bis 7, **dadurch gekennzeichnet,** daß zwischen dem objektseitigen Endbereich des Außenmantels (10) und dem Frontlinsensystem (12) ein mit dem Außenmantel (10) verschraubter Reflexschutz (49) angeordnet ist, derart, daß zwischen dem Frontlinsensystem (12) und dem Reflexschutz (49) ein ringförmiger Luftspalt (52) verbleibt.

9. Wechselobjektiv nach Anspruch 8, **dadurch gekennzeichnet,** daß der Reflexschutz (49) den auf die Innenfläche einer Hülse (45) vulkanisierten, objektseitigen Dämpfungsring (16) im Außenmantel (10) axial positioniert.

10. Verfahren zur Herstellung eines Wechselobjektivs nach einem der Ansprüche 4 bis 6, **dadurch gekennzeichnet**, daß ein zur Aufnahme eines als Frontlinsensystem (12) ausgeführten Frontelements dienender und mit der Objektivkapsel (11) verbundener Tubus (19) einstückig mit einer Linsenfassung (20) des Frontlinsensystems (12) als Fertigungseinheit (42) gefertigt wird, und nach dem Einvulkanisieren eines Dämpfungsrings (18) in einen hierfür vorgesehenen Zwischenraum (43) der Fertigungseinheit (42) die Trennung der Fertigungseinheit (42) in zwei unabhängig voneinander handhabbare Teile, nämlich den Tubus (19) und die Linsenfassung (20) erfolgt, wobei der Dämpfungsring (18) nach dem Trennvorgang mit dem Tubus (19) und der Linsenfassung (20) verbunden bleibt.

## Claims

1. Interchangeable lens for a movie film camera with a lens socket (13) detachably fixed on the movie film camera, a lens capsule (11) connected to the lens socket and an outer sleeve (10) which contains the adjustment elements of the interchangeable lens and which is connected to the lens capsule (11) by sound-absorbing damping rings (16, 17, 18), characterised in that a damping ring (16) on the lens side and a damping ring (17) on the camera side centre the outer sleeve (10) in its end areas radially supported on the lens capsule (11).

2. Interchangeable lens according to claim 1 characterised in that the damping ring (16) on the lens side fixes the outer sleeve (10) axially on the lens capsule (11).

3. Interchangeable lens according to claim 1 or 2 characterised in that the adjustment elements contained in the outer sleeve (10) are connected to corresponding adjustment devices inside the lens capsule (11) by entrainment pins (21, 22, 22, 23) projecting out of the lens capsule (11) wherein these entrainment pins (21, 22, 23) are connected to the adjustment devices by damping elements (24, 25, 26).

4. Interchangeable lens according to claim 1 characterised by a front lens system (12) which is set in the front area of the lens capsule and is connected to and supported on the lens capsule (11) by one of the sound-absorbing damping rings (18) whilst centring the capsule.

5. Interchangeable lens according to claim 4 characterised in that the damping ring (18) is vulcanized into an interspace (43) of a ready-made finished unit (42) comprising a tube (19) and a lens socket (20) of the front lens system (12).

6. Interchangeable lens according to claim 4 or 5 characterised in that the tube (19) forms a constituent part of the lens capsule (11) which extends the lens capsule (11) on the lens side, and the tube is screwed to the lens capsule.

7. Interchangeable lens according to one of claims 5 or 6 characterised in that the damping ring (16) on the lens side for supporting the outer sleeve (10), and the damping ring (18) for holding the front lens system (12) are supported on opposite support faces of the tube (19) of the lens capsule (11).

8. Interchangeable lens according to one of claims 4 to 7 characterised in that a reflex protector (49) screwed onto the outer sleeve (10) is arranged between the end area of the outer sleeve (10) on the lens side and the front lens system (12) so that an annular air gap (52) remains between the front lens system (12) and the reflex protector (49).

9. Interchangeable lens according to claim 8 characterised in that the reflex protector (49) positions the damping ring (16) on the lens side which is vulcanized onto the inner face of a sleeve (45), axially in the outer sleeve (10).

10. Process for manufacturing an interchangeable lens according to one of claims 4 to 6 characterised in that a tube (19) connected to the lens capsule (11) and serving to hold a front element designed as the front lens system (12) is made in one piece with a lens socket (20) of the front lens system (12) to form a ready made finished unit (42), and after vulcanization of a damping ring (18) in an interspace (43) provided for this purpose in this finished unit (42), the unit (42) is separated into two parts which can be handled independently of each other, namely the tube (19) and the lens socket (20) wherein after the separation process the damping ring (18) remains connected to the tube (19) and the lens socket (20).

## Revendications

1. Objectif interchangeable pour une caméra cinématographique, comprenant une monture d'objectif (13) fixée de façon détachable à la caméra, un boîtier d'objectif (11) relié à la monture d'objectif et une enveloppe externe (10) qui contient l'élément de réglage de l'objectif interchangeable et qui est reliée au boîtier d'objectif (11) par l'intermédiaire de bagues d'amortissement (16, 17, 18) qui absorbent le bruit, caractérisé en ce qu'une bague d'amortissement (16) du côté de l'objet et une bague d'amortissement (17) du côté de la caméra centrent l'enveloppe externe (10) dans ses zones d'extrémité, en s'appuyant radialement sur le boîtier d'objectif (11).

2. Objectif interchangeable suivant la revendication 1, caractérisé en ce que la bague d'amortissement (16) du côté de l'objet fixe axialement l'enveloppe externe (10) sur le boîtier d'objectif (11).

3. Objectif interchangeable suivant la revendication 1 ou 2, caractérisé en ce que les éléments de réglage contenus dans l'enveloppe externe (10) sont en liaison à l'intérieur du boîtier d'objectif (11) avec les dispositifs de réglage correspondants par l'intermédiaire de tiges d'entraînement (21, 22, 23) qui font saillie du boîtier d'objectif (11), les tiges d'entraînement (21, 22, 23) étant reliées aux dispositifs de réglage par l'intermédiaire d'éléments d'amortissement (24, 25, 26).

4. Objectif interchangeable suivant la revendication 1, caractérisé par un système de lentilles frontales (12) qui est relié au boîtier d'objectif, qui est agencé dans la zone frontale du boîtier d'objectif, qui est relié par l'intermédiaire d'une des bagues d'amortissement (18) qui absorbe le bruit au boîtier d'objectif (11) et qui est monté de façon centrée sur ce boîtier.

5. Objectif interchangeable suivant la revendication 4, caractérisé en ce que la bague d'amortissement (18) est vulcanisée dans un espace intermédiaire (43) d'un ensemble préfabriqué (42) constitué d'un tube (19) et d'une monture de lentilles (20) du système de lentilles frontales (12).

6. Objectif interchangeable suivant la revendication 4 ou 5, caractérisé en ce que le tube (19) forme un élément d'écartement, du boîtier d'objectif (11), qui prolonge du côté de l'objet le boîtier d'objectif (11).

7. Objectif interchangeable suivant l'une des revendications 5 et 6, caractérisé en ce que la bague d'amortissement (16) du côté de l'objet, pour le montage de l'enveloppe externe (10), et la bague d'amortissement (18), pour le logement du système de lentilles frontales (12), s'appuient sur des surfaces d'appui opposées l'une par rapport à l'autre du tube (19) du boîtier d'objectif (11).

8. Objectif interchangeable suivant l'une quelconque des revendications 4 à 7, caractérisé en ce qu'entre la zone d'extrémité, du côté de l'objet, de l'enveloppe externe (10) et le système de lentilles frontales (12) il est agencé une protection contre des reflets (49) vissée à l'enveloppe externe (10), de façon qu'un interstice d'air (52) annulaire reste entre le système de lentilles frontales (12) et la protection contre des reflets (49).

9. Objectif interchangeable suivant la revendication 8, caractérisé en ce que la protection contre des reflets (49) positionne axialement dans l'enveloppe externe (10) la bague d'amortissement (16), du côté de l'objet, qui est vulcanisée sur la surface interne d'une douille (45).

10. Procédé de fabrication d'un objectif interchangeable suivant l'une quelconque des revendications 4 à 6, caractérisé en ce qu'on fabrique sous la forme d'un ensemble préfabriqué (42), d'une pièce avec une monture de lentilles (20) d'un système de lentilles frontales (12), un tube (19) qui sert au logement d'un élément frontal réalisé sous la forme du système de lentilles frontales (12) et qui est relié au boîtier d'objectif (11) et, en ce que, après la vulcanisation d'une bague d'amortissement (18) dans un espace intermédiaire (43), prévu à ce sujet, de l'ensemble préfabriqué (42), a lieu la séparation de l'ensemble préfabriqué (42) en deux éléments qui peuvent être actionnés indépendamment l'un de l'autre, à savoir le tube (19) et la monture de lentilles (20), la bague d'amortissement (18) restant reliée au tube (19) et à la monture de lentilles (20) après le processus de séparation.
